# EUROPEAN PATENT APPLICATION

(11) **EP 2 722 139 A2**
(43) Date of publication of application: **23.04.2014**
(21) Application number: 12799780.7
(22) Date of filing: 12.06.2012
(51) Int. Cl.: B25J 19/06, B25J 18/00

(54) **APPARATUS EQUIPPED WITH PHASE MAINTENANCE MEANS**

(30) Priority: 14.06.2011 KR 20110057319
(71) Applicant: Park, Soon Pil, Changwon-si, Gyeongnam 641-242 (KR)
(72) Inventor: Park, Soon Pil, Changwon-si, Gyeongnam 641-242 (KR)
(74) Representative: Epping - Hermann - Fischer
(86) International application number: PCT/KR2012/004633
(87) International publication number: WO 2012/173374

(57) **Abstract**

There is provided an apparatus having a phase preservation means. The apparatus includes a phase preservation means that has a reference shaft fixed to one sides of frames supporting a plurality of components, a driven shaft revolving around the reference shaft with a predetermined distance spaced apart therebetween, a force transmitting part connected to the driven shaft and the reference shaft to restrict rotation of the driven shaft, and supporting parts that guide revolving of the driven shaft around the reference shaft when the supporting parts are rotated by a rotational force applied by the force generating part and allows a phase of the driven shaft to be preserved; and a phase preservation part that is connected and fixed to one side of the driven shaft.

## Description

### [Technical Field]

The present invention relates to an apparatus having a phase preservation means, and more particularly, to an apparatus having a phase preservation means, which includes a single force generating part and a single force transmitting member or a plurality of force transmitting members and also includes a phase preservation means capable of automatically preserving a phase of a driven shaft even though the phase preservation means moves in a circular motion by being mechanically interlocked when the force generating part generates a rotational force.

### [Background Art]

In general, in order to transfer or load a transferring target at locations having different heights and different positions, a robot having a plurality of servomotors capable of adjusting a rotational speed and a rotational angle is used, or equipment such as a lifter or a transfer is used.

When the robot is used, initial investment cost is expensive, and an expert for operating the robot is needed.

Further, when the lifter is used, there are problems in that a plurality of components and operating parts are needed, it takes a long time to manufacture and assembly the lifter, and it is highly likely to cause foreign substances. When a heavy transferring target is loaded, since only one side of the transferring target is supported, the transferring target may sag.

Moreover, there is a problem in that it is difficult to perform maintenance when failure occurs.

Accordingly, various loading apparatuses have been developed and used depending on needs of a user in consideration of a size of the transferring target or a working environment.

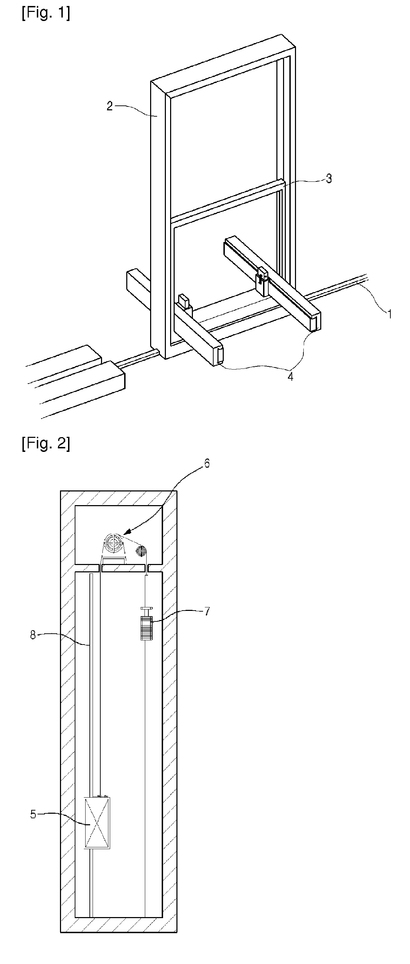

That is, Fig. 1 is a diagram illustrating a configuration of an apparatus for loading cargo for classifying and loading a cargo disclosed in Korean Registered Patent No. 0953012, and the apparatus includes a horizontal transferring part 2 that moves in a straight-line reciprocating motion along a transferring rail 1 disposed at a passageway; a vertical transferring part 3 that is transferred in a height direction inside the horizontal transferring part 2; and a pair of phase preservation parts 4 that moves in a straight-line reciprocating motion so as to load a transferring target to the left or right of the passageway inside the horizontal transferring part 2.

However, since the loading apparatus having the above-described configuration includes a plurality of power generating parts that independently transfers the horizontal transferring part 2, the vertical transferring part 3 and the phase preservation parts 4 in order to load the transferring target, there is a problem in that manufacturing cost is increased.

Further, since the transferring rail 1, the horizontal transferring part 2 and the vertical transferring part 3 are exposed to the outside, foreign substance is introduced, so that it is inconvenient to perform maintenance.

Furthermore, since the horizontal transferring part 2 and the vertical transferring part 3 move in a straight-line motion to cause vibration and noise, the loading apparatus is environmentally friendly.

Meanwhile, Fig. 2 is a cross-sectional view illustrating a configuration of a lifter according to the related art, and the lifter includes a car 5 that forms a loading space therein and moves up and down; a traction machine 6 that drives the car to move up and down by being connected to the car through a wire rope to rotate and reversely rotate; a heavy weight 7 that is disposed at one side of the wire rope; and a rail 8 that guides the up and down direction of the car 5.

However, the lifter transfers the transferring target only in the up and down direction, and when a heavy transferring target is loaded, the transferring target may sag.

Moreover, since the rail 8 is exposed to the outside to contact with foreign substances, it is difficult to perform maintenance, and the car 5 moves in a straight-line motion along the rail 8 to cause vibration and noise.

### [Disclosure]

### [Technical Problem]

In order to solve the aforementioned problems, an object of the present invention is to provide an apparatus having a phase preservation means, which includes a single force generating part and a single force transmitting member or a plurality of force transmitting members and also includes a phase preservation means capable of automatically preserving a phase of a driven shaft with respect to a reference shaft by being mechanically interlocked when the force generating part generates a rotational force.

Further, an object of the present invention is to also provide an apparatus that includes a motion part to transfer a moving and mounting target up and down and back and forth and also includes an additional device such as a conveyor, a gripper, an adsorption plate, and a loading table.

### [Technical Solution]

An exemplary embodiment of the present invention provides an apparatus having a phase preservation means. The apparatus includes a phase preservation means that has a reference shaft fixed to one sides of frames supporting a plurality of components, a driven shaft revolving around the reference shaft with a predetermined distance spaced apart therebetween, a force transmitting part connected to the driven shaft and the reference shaft to restrict rotation of the driven shaft, and supporting parts that guide revolving of the driven shaft around the reference shaft when the supporting parts are rotated by a rotational force applied by the force generating part and allows a phase of the driven shaft to be preserved; and a phase preservation part that is connected and fixed to one side of the driven shaft.

The apparatus may further include a motion part that forcibly moves the phase preservation part in a rotary motion and a straight-line reciprocating motion.

An additional device that performs at least any one operation of an adsorbing operation, a gripping operation, a transferring operation, and a rotating operating of a transferring target may be further provided at one side of the phase preservation part.

The force transmitting part may further include a first force transmitting member that is pivotally connected to the reference shaft, a second force transmitting member that is pivotally connected to the driven shaft, and a third force transmitting member that is connected to the first force transmitting member and the second force transmitting member to restrict slipping and restricts rotation of the second force transmitting member when the supporting parts rotate.

A connecting part that transmits the rotational force of the force generating part may be provided at one of the supporting parts.

The connecting part may be spaced apart from the reference shaft, and a rotation center of the connecting part may be positioned in the same straight line as the reference shaft.

A first rotation guiding member that guides the rotation of the supporting part about the reference shaft may be provided at one side of the reference shaft.

A second rotation guiding member that allows the supporting parts and the driven shaft to freely rotate when the driven shaft revolves around the reference shaft by the rotation of the supporting parts may be provided at one side of the driven shaft.

A weight balance that offsets weights of the supporting parts, the driven shaft and the transferring target to reduce a load of a driving part may be provided at one of the supporting parts.

A position of the weight balance may be able to be changed.

A phase shifting means for varying a phase of the phase preservation part by applying the rotational force to the reference shaft to rotate the force transmitting part may be provided at one of the frames.

### [Effect of the Invention]

As described in detail above, in the apparatus having a phase preservation means according to the present invention, a single force generating part and a single force transmitting member or a plurality of force transmitting members are provided, and the phase preservation part that preserves automatically a phase of the driven shaft without being changed even though the driven shaft revolves around the reference shaft when the supporting parts rotate about the reference shaft by the rotational force of the force generating part is provided.

Accordingly, there are advantages in that it is possible to stably move the transferring target at any position of a circumference through unitarily driving.

Further, since a phase preserving function is mechanically provided, a system control program is simplified, and power consumption is reduced. Thus, it is possible to save energy.

Furthermore, since the number of components is small, it is possible to reduce manufacturing cost and it is easy to assemble and install. Furthermore, since foreign substances are minimized, it is possible to apply the apparatus to a clean room facility.

Moreover, in the present invention, the motion part that allows the phase preservation part to move in a straight-line reciprocating motion and a rotary motion is further provided. The additional device is further provided so as to perform any one operation of an adsorbing operation, gripping operation, and transferring operation of the transferring target.

Accordingly, it is easy to load and move the transferring target, and since the motion part and the additional device are interlocked with each other to load and transfer the transferring target at loaded locations having different heights and different positions, it is possible to apply the apparatus to various areas.

### [Description of Drawings]

Fig. 1 is a perspective view illustrating a configuration of a loading apparatus according to the related art;
Fig. 2 is a cross-sectional view illustrating a configuration of a lifter according to the related art;
Fig. 3 is a side perspective view illustrating a configuration of an apparatus having a phase preservation means according to the present invention;
Fig. 4 is a front view illustrating a configuration of the apparatus having a phase preservation means according to the present invention;
Fig. 5 is a schematic diagram for describing a principle in which a phase of a driven shaft is preserved in the apparatus having a phase preservation means according to the present invention;
Fig. 6 is a side view illustrating a case where the driven shaft is disposed in a diagonal line direction with respect to a reference shaft in the apparatus having a phase preservation means according to the present invention;
Fig. 7 is a side view illustrating a case where the driven shaft is disposed at a lower side from the reference shaft in the apparatus having a phase preservation means according to the present invention;
Fig. 8 is a side view illustrating a preferred embodiment of a configuration of an additional device in the apparatus having a phase preservation means according to the present invention;
Fig. 9 is a side view illustrating a case where a phase preservation part moves up and down in the apparatus having a phase preservation means according to the present invention;
Fig. 10 is a longitudinal cross-sectional view illustrating another embodiment of a configuration of the force generating part and a configuration of the phase shifting means in the apparatus having a phase preservation means according to the present invention;
Fig. 11 is a longitudinal cross-sectional view illustrating still another embodiment of a configuration of the phase shifting means in the apparatus having a phase preservation means according to the present invention; and
Figs. 12 to 15 are longitudinal cross-sectional views illustrating a case where the phase preservation means and the phase shifting means are simultaneously provided in the apparatus having a phase preservation means according to the present invention.

### [Best Mode]

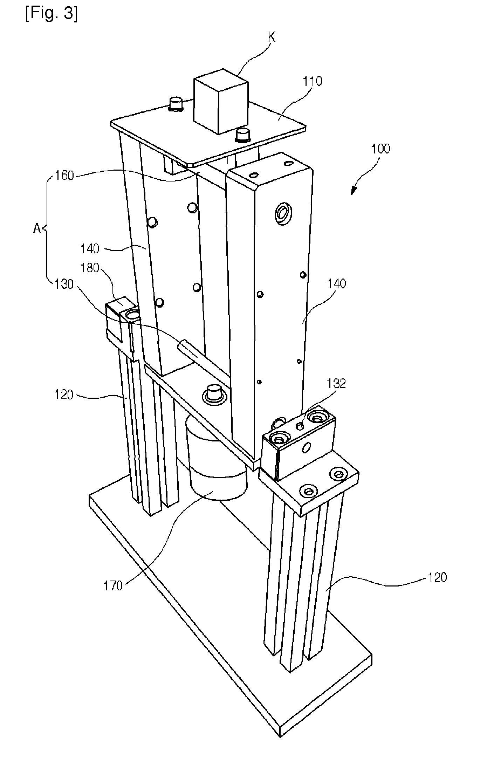

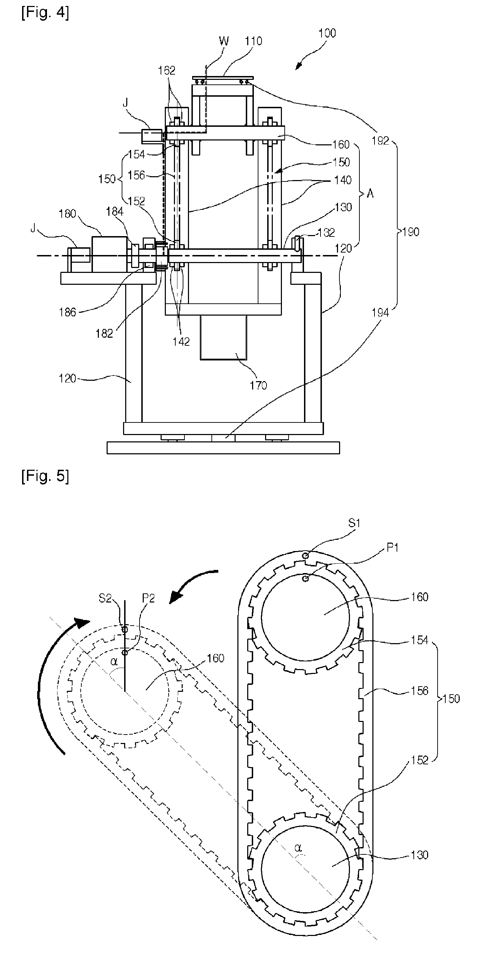

Hereinafter, an exterior configuration of an apparatus 100 according to the present invention will be described with reference to Figs. 3 and 4.

Fig. 3 is a side perspective view illustrating a configuration of an apparatus having a phase preservation means according to the present invention, and Fig. 4 is a front view illustrating the configuration of the apparatus having a phase preservation means according to the present invention.

Before the description, terms and words used herein and claims are not interpreted as the meaning generally used in the dictionary, but should be interpreted as the meaning and concept coincident with the technological sprit of the present invention on the basis of a fundamental rule that an inventor can suitably define the concept of corresponding terms to describe his or her invention using the best method.

Accordingly, embodiments described in the specifications and configurations illustrated in the drawings are merely preferred embodiments of the present invention, and do not wholly represent the technical sprit of the present invention. Therefore, it should be appreciated that various modifications and equivalents to these embodiments are possible at the time of filing the present application.

As shown in the accompanying drawings, the apparatus 100 according to the present invention has a phase preservation means A, and is configured to allow a driven shaft 160 to be preserved at a predetermined phase even though supporting parts 140 rotate about a reference shaft 130.

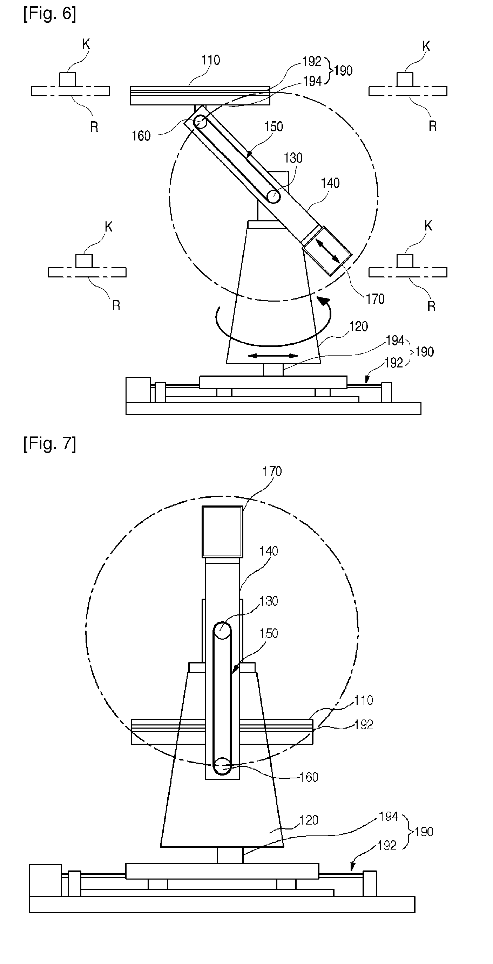

Accordingly, the apparatus 100 can transfer a transferring target K mounted on a phase preservation part 110, move the transferring target to a target mounting part (see reference numeral R of Fig. 6), and mount the transferring target on the target mounting part. The apparatus is configured to load and transfer the transferring target K to various positions with a simple configuration.

Further, a force generating part 180 is provided at the apparatus 100 to apply a rotational force to the phase preservation means A, and the phase preservation part 110 can be preserved at the same phase even though the rotational force is applied.

The force generating part 180 may be applied in various forms within a range capable of rotating the supporting parts 140, and can selectively adopt power sources such as electricity, hydraulics, and pneumatics.

A detailed configuration of the phase preservation means A is described with reference to Fig. 4. The phase preservation means A includes the reference shaft 130 that is fixed to upper sides of frames 120, which support loads of multiple components, so as not to rotate; the driven shaft 160 that revolves around the reference shaft 130 with a predetermined distance spaced apart therefrom; force transmitting parts 150 that simultaneously come in contact with the driven shaft 160 and the reference shaft 130 to restrict rotation of the driven shaft 160; and the supporting parts 140 that simultaneously rotate about the reference shaft 130 when the supporting parts are rotated by the rotational force applied from the force generating part 180 to guide the revolving of the driven shaft 160 and allows a phase of the driven shaft 60 to be preserved.

The reference shaft 130 serves as rotation centers of the supporting parts 140 by being fixed to the frames 120 so as not to rotate and being inserted into lower sides of the supporting parts 140.

That is, the rotation of the reference shaft 130 is restricted by being fixed to the frame 120 by a fixing member 132.

The supporting parts 140 are provided at the reference shaft 130. The supporting parts 140 is configured to allow a load of the transferring target K loaded on the phase preservation part 110 to be supported by the reference shaft 130 and to allow the phase preservation part 110 to be preserved at a predetermined angle, for example, in a direction parallel to a ground surface.

Further, the force transmitting parts (reference numeral 150 of Fig. 4) to be described below are provided within the supporting parts 140.

Accordingly, the load of the transferring target K mounted on the phase preservation part 110 may be supported by the supporting parts 140 and the reference shaft 130, and the transferring target can rotate about the reference shaft 130 while preserving its phase.

The driven shaft 160 is provided between the supporting parts 140. The driven shaft 160 is rotatably connected to upper sides of the supporting parts 140 and is connected to the phase preservation part 110. When the supporting parts 140 rotate, the phase preservation part 110 is rotated at the same rotational angle and speed as those of the driven shaft 160.

Accordingly, the driven shaft 160 and the phase preservation part 110 may be integrally formed.

Since the driven part 160 is rotatably connected to the supporting parts 140, the force transmitting parts 150 that restrains the rotatable connection and maintains the driven shaft 160 at a predetermined angle with respect to the ground surface even though the supporting parts 140 rotate about the reference shaft 130 to allow the phase preservation part 110 to be horizontally maintained (to preserve a phase) are further provided.

Furthermore, a weight balance 179 is further provided at a lower side of the supporting parts 140. The weight balance 170 offsets weights of the supporting parts 140, the phase preservation part 110 and the transferring target K to minimize a load of the force generating part 180.

Moreover, the weight balance 170 may have an actuator to change a center of gravity.

That is, the weight balance 170 can compensate for non-uniformity in weight by adjusting a distance spaced apart from the reference shaft 130 whenever a weight of the transferring target K is changed.

For example, when the transferring target K is heavy, the weight balance 170 is preferably control to be further separated from the reference shaft 130.

The apparatus 100 can prevent the loaded transferring target K from being fallen by preserving the phase of the phase preservation part 110 without being changed when the supporting parts 140 rotate.

To achieve this, the force generating part 180 is unitarily provided at a left side of the supporting parts 140.

The force generating part 180 receives a power from the outside to generate the rotational force, and a motor is applied as the force generating part in the embodiment of the present invention. As stated above, the force generating part may be naturally implemented in various forms.

In addition, a connecting part 182 capable of transmitting the rotational force to the supporting parts 140 is provided at a right side of the force generating part 180. The connecting part 182 is interlocked with a rotating part of the force generating part 180 by being pivotally connected thereto, and a right side of the connecting part 182 is connected to the supporting parts 140 to be fixed thereto.

Accordingly, a rotational power generated by the force generating part 180 is transmitted to the supporting parts 140 through the connecting part 182 to rotate the supporting parts 140 about the reference shaft 130.

Further, a decelerator 184 for controlling rotational speeds of the supporting parts 140 is further provided between the force generating part 180 and the connecting part 182. The connecting part 182 can be rotated by a bearing 186 that is rotationally provided at one of the frames 120, and the left one of the supporting parts 140 can maintain in such a state that the reference shaft 130 is supported by the frame 120 through a housing of the bearing 186.

Furthermore, in the embodiment of the present invention, rotation centers of the force generating part 180, the connecting part 182, the bearing 186 and the reference shaft 130 are positioned in the same straight line.

Accordingly, the rotational force applied by the force generating part 180 is transmitted to the supporting parts 140 through the connecting part 182, and the supporting parts 140 can rotate about the reference shaft 130.

First rotation guiding members 142 are respectively provided within the supporting parts 140. The first rotation guiding members 142 guide the supporting parts 140 so as to rotate about the reference shaft 130 fixed to the frame 120 by the fixing member 132, and a bearing is preferably applied as the first rotation guiding member. The reference shaft 130 is inserted into inner races of the first rotation guiding members and outer races thereof come in contact with insides of the supporting parts 140, so that the first rotation guiding members can allow the supporting parts 140 to rotate.

Second rotation guiding members 162 are provided at the driven shaft 160. The second rotation guiding members 162 can allow the driven shaft 160 to rotate within the supporting parts 140.

That is, inner races of the second rotation guiding members 162 are connected to the driven shaft 160, and outer races thereof come in contact with the insides of the supporting parts 140 by being inserted into the supporting parts to be fixed thereto.

At this time, the driven shaft 160 can rotate freely from the supporting parts 140 by the second rotation guiding members 162.

Meanwhile, the force transmitting parts 150 which are major components of the present invention are respectively provided between the first rotation guiding members 142 and the second rotation guiding members 162.

The force transmitting parts 150 can allow the driven shaft 160 that is connected to the supporting parts 140 freely and rotatably to preserve the phase even though the supporting parts 140 rotate. The force transmitting part includes a first force transmitting member 152, a second force transmitting member 154 and a third force transmitting member 156.

A detailed configuration of the force transmitting part 150 is described with reference to Figs. 4 and 5.

Fig. 5 is a schematic diagram for describing a principle in which the phase of the driven shaft is preserved in the apparatus having a phase preservation means according to the present invention.

As shown in the drawings, the force transmitting part 150 includes the first force generating member 152 that is pivotally connected to the reference shaft 130 by a method such as key; the second force transmitting member 154 that is pivotally connected to the driven shaft 160; and the third force transmitting member 156 that is connected to the first force transmitting member 152 and the second transmitting member 154 so as not to slip and restricts rotation of the second force transmitting member 154 when the supporting parts 140 rotate.

The first force transmitting member 152 is pivotally connected to the reference shaft 130 and is fixed to the frame 120 so as not to rotate, and the second force transmitting member 154 is interlocked with the driven shaft 160 by being pivotally connected to the driven shaft 160.

Moreover, the first force transmitting member 152 and the second force transmitting member 154 are maintained at a predetermined distance spaced apart therebetween by the supporting parts 140, and the third force transmitting member 156 restricts the rotation of the driven shaft 160 and allows the driven shaft to revolve only around the reference shaft 130 when the supporting parts 140 are rotated by the operation of the force generating part 180.

That is, since protrusions and recesses formed on an inner surface of the third force transmitting member 156 are engaged with protrusions and recesses formed on outer surfaces of the first force transmitting member 152 and the second force transmitting member 154, the third force transmitting member comes in contact with the first and second force transmitting members without slipping, so that the first force transmitting member 152 and the second force transmitting member 154 are maintained so as not to rotate when the supporting parts 140 do not rotate.

Accordingly, the first force transmitting member 152 and the second force transmitting member 154 have the same outer diameter, and the protrusions and recesses formed on the first force transmitting member 152 and the second force transmitting member 154 have the same size and shape.

In addition, it is preferable that the protrusions and recesses formed on the third force transmitting member 156 also have the same size and shape as those of the protrusions and recesses of the first force transmitting member 152 and the second force transmitting member 154.

Referring to points P1, P2, S1 and S2 depicted in Fig. 5, when the supporting parts 140 rotate about the reference shaft 130 by α° in a counterclockwise direction, the feature point S1 of the third force transmitting member 156 is moved to the point S2.

Meanwhile, as the point S1 is moved to the point S2, the driven shaft rotates by α° in a clockwise direction, so that the feature point P2 of the driven shaft 160 is positioned at the point P2. That is, the driven shaft 160 is changed from P1 to P2 in its position without rotating, and the phase thereof is preserved without being changed.

Although the second force transmitting member 154 comes in contact with the third force transmitting member 156, as the second force transmitting member 154 revolves around the first force transmitting member 152, the second force transmitting member 154 is engaged with the third force transmitting member 156 to relatively rotate by a predetermined angle within the third force transmitting member 156. Thus, the phase of the driven shaft is preserved without being changed even though the position thereof is changed.

Accordingly, the phase of the point P is preserved without being changed by the action of the second force transmitting member 154 and the third force transmitting member 156 even though the supporting parts 140 rotate by any angle.

For example, when it is assumed that the phase preservation part 110 is connected to an outer surface of the driven shaft 160 where the point P is positioned by a method such as welding, since the point P is constantly positioned at an upper side by the action of the force transmitting part 150, the phase preservation part 110 can also be horizontally maintained.

The force transmitting part 150 may be implemented in various forms within a range capable of preventing its slipping such as a chain or a timing belt combined with a sprocket or a pulley. In the embodiment of the present invention, a timing pulley is applied as the first force transmitting member 152 and the second force transmitting member 154, and a timing belt is applied as the third force transmitting member 156.

Accordingly, a tension preservation member (not shown) capable of preserving tension of the third force transmitting member 156 may be further provided at the force transmitting part 150.

Meanwhile, a motion part 190 may be further provided at the apparatus 100. The motion part 190 corrects that the phase preservation part 110, which allows the same phase to be preserved even though the supporting parts 140 rotate, so as not to be farther from or close to a loaded position. The motion part 190 may include a straight-line motion part 192 and a rotary motion part 194.

That is, the straight-line motion part 192 may allow the phase preservation part 110 to move back and forth in a straight-line reciprocating motion as shown in Fig. 3, and the rotary motion part 194 may allow the frames 120 to rotate about a rotation center perpendicular to the ground surface.

Further, the straight-line motion part 192 may further include a separate cylinder or motor, and a supply line W may be preferably provided so as to supply air, fluid, or power to the cylinder or motor.

Furthermore, the straight-line motion part 192 and the rotary motion part 194 are respectively provided at the phase preservation part 110 and the frame 120 to enable the phase preservation part 110 to move in a straight-line motion and in a rotary motion, and to enable the entire apparatus 100 to move in a straight-line motion and in a rotary motion.

At this time, as the supporting parts 140 rotate about the reference shaft 130, the supply line W is twisted, so that the supply line is disconnected. For this reason, the supply line can be prevented from being twisted by connecting the supply line W by using a rotary joint and can supply a power.

When the apparatus 100 having the above-described configuration is operated, even though rotational angles of the supporting parts 140 are changed, the phase preservation part 110 can be horizontally maintained, as shown in Figs. 6 to 9.

Fig. 6 is a side view illustrating a case where the driven shaft is disposed in a diagonal line direction with respect to the reference shaft in the apparatus having a phase preservation means according to the present invention, and Fig. 7 is a side view illustrating a case where the driven shaft is disposed at a lower side from the reference shaft in the apparatus having a phase preservation means according to the present invention.

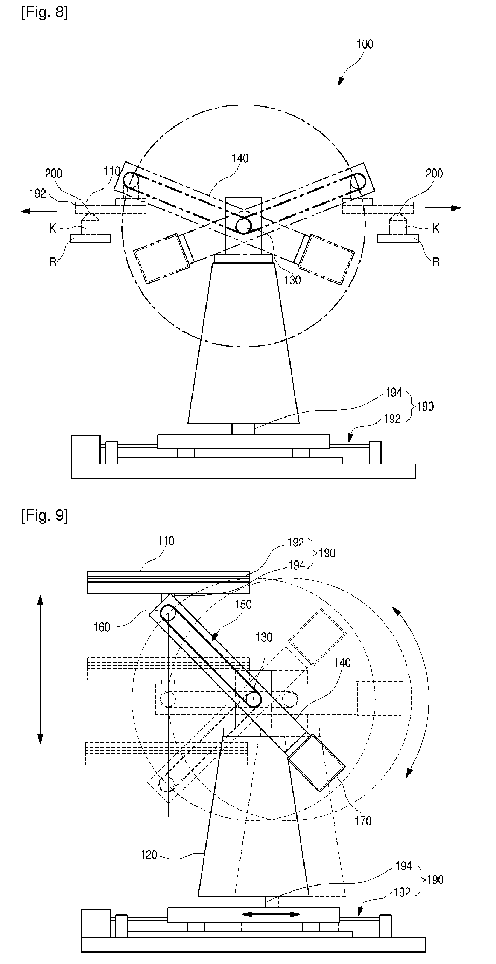

Fig. 8 is a side view illustrating a preferred embodiment of a configuration of an additional device in the apparatus having a phase preservation means according to the present invention, and Fig. 9 is a side view illustrating a case where the phase preservation part moves up and down in the apparatus having a phase preservation means according to the present invention.

As illustrated in Fig. 7, even though the phase preservation part 110 is moved to the lower side by the rotation of the supporting parts 140, since the phase preservation part is not upside down, the transferring target K can be transferred while being stably supported. At this time, the phase preservation part 110 does not interfere with the frame 120.

Moreover, as shown in Fig. 8, an additional device 200 may be further provided at the apparatus 100. The additional device 200 is configured to more easily transfer the transferring target K, and an adsorption unit that adsorbs using vacuum pressure, an attraction unit that generates an attractive force by using magnetism, or a rotational unit may be variously used as the additional device.

In the embodiment described in Fig. 8 of the present invention, the adsorption unit is used as the additional device 200. The additional device is configured to mount the transferring target K on the target mounting part R positioned on the right by adsorbing the transferring target K which is mounted on the target mounting part R and is positioned on the left and then rotating the supporting parts 140 in a clockwise direction.

At this time, when the supporting parts 140 rotate in a clockwise direction, the phase preservation part 110 moves in a straight-line motion to the right by the operation of the straight-line motion part 192, so that it is possible to reduce a processing time.

In addition, as shown in Fig. 9, the phase preservation part 110 can vertically move up and down when the supporting parts 140 rotate.

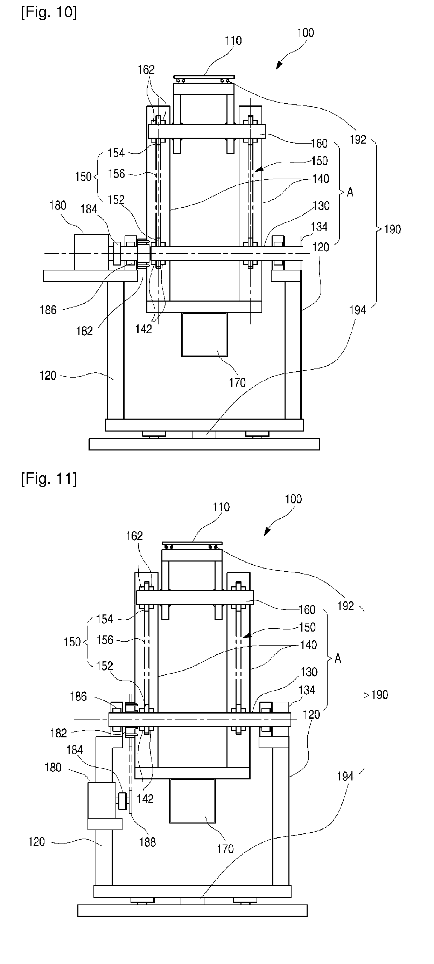

That is, Fig. 9 illustrates a side view illustrating a case where the phase preservation part moves up and down in the apparatus having a phase preservation means according to the present invention, and it is possible to control the phase preservation part 110 to move up and down along arrow of Fig. 10 by preserving the phase of the phase preservation part 110 by the force transmitting part 150 and controlling the straight-line motion by the straight-line motion part 192.

Meanwhile, the apparatus 100 may further include a phase shifting means 134 as shown in Fig. 10. The phase shifting means 134 can adjust the phase of the phase preservation part 110 to be inclined by exerting the rotational force to the reference shaft 130 to rotate the driven shaft 160 through the force transmitting part 150.

At this time, an external force such as an attractive force, hydraulics, pneumatics, or electricity may be selectively applied as long as the phase shifting means 134 is capable of applying the external force to the reference shaft 130, and the phase shifting means is pivotally connected to the reference shaft 130 to be interlocked therewith.

Further, it is preferable that the phase shifting means 134 include a break to control the reference shaft 130 not to freely rotate when the rotational force is not applied to the reference shaft 130.

Accordingly, when the phase shifting means 134 is provided, the fixing member 132 may not be provided.

When it is attempt to move the heavy transferring target, the force generating part 180 may transmit a force to the support shaft 140 in an indirect driving manner as shown in Fig. 11.

That is, the force generating part 180 is configured to rotate the connecting part 182 by using a pulley and a belt, and adopts an indirect driving manner in which the rotation center thereof is not positioned in the same straight line as the connecting part 182. The rotational centers of the connecting part 182, the bearing 186 and the reference shaft 130 are identical to each other, but a rotation center of the force generating part 180 is not identical thereto.

Accordingly, the force generating part 180 includes a forcible rotating member 188 for applying the rotational power to the supporting parts 140, and the forcible rotating member 188 is connected to the connecting part 182 which is connected and fixed to the outer surfaces of the supporting parts 140, through a chain. The connecting part 182 freely rotates about the reference shaft 130 by the action of the bearing 186, or the forcible rotating member 188 is spaced apart from the reference shaft 130.

Accordingly, when the force generating part 180 generates the rotational force to rotate the connecting part 182 by using the forcible rotating member 188, since the connecting part 182 is connected to the supporting parts 140, it is possible to rotate the supporting parts 140.

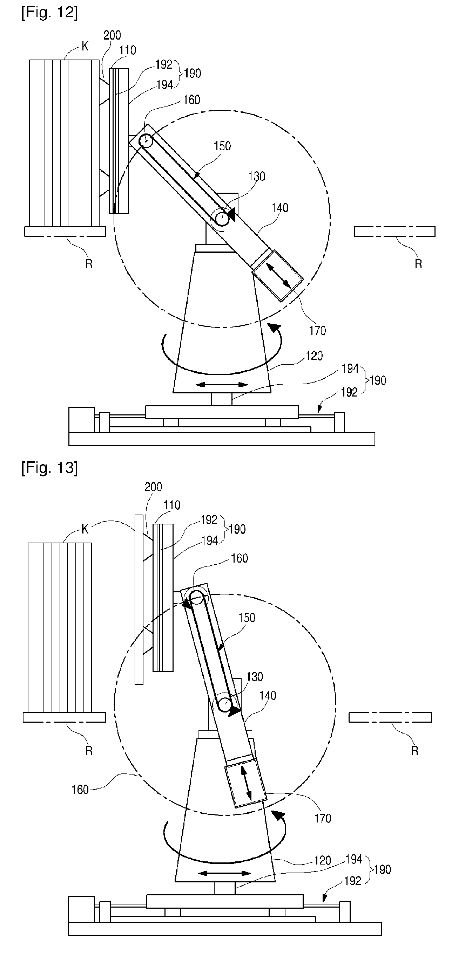

The action of the force generating part 180 and the phase shifting means 134 will be described with reference Figs. 12 to 15.

Figs. 12 to 15 are longitudinal cross-sectional views illustrating a case where the phase preservation means and the phase shifting means are simultaneously provided in the apparatus having a phase preservation means according to the present invention.

Firstly, in order to transfer a standing plate-shaped transferring target K shown in Fig. 12 so as to be laid on the target mounting part R positioned on the right, when a adsorption plate is adopted as the additional device 200, the additional device 200 is attached to the transferring target K.

Thereafter, the supporting parts 140 rotate about the reference shaft 130 in a clockwise direction to enter a state shown in Fig. 13.

At this time, the phase preservation part 110 preserves the phase by the action of the force transmitting part 150.

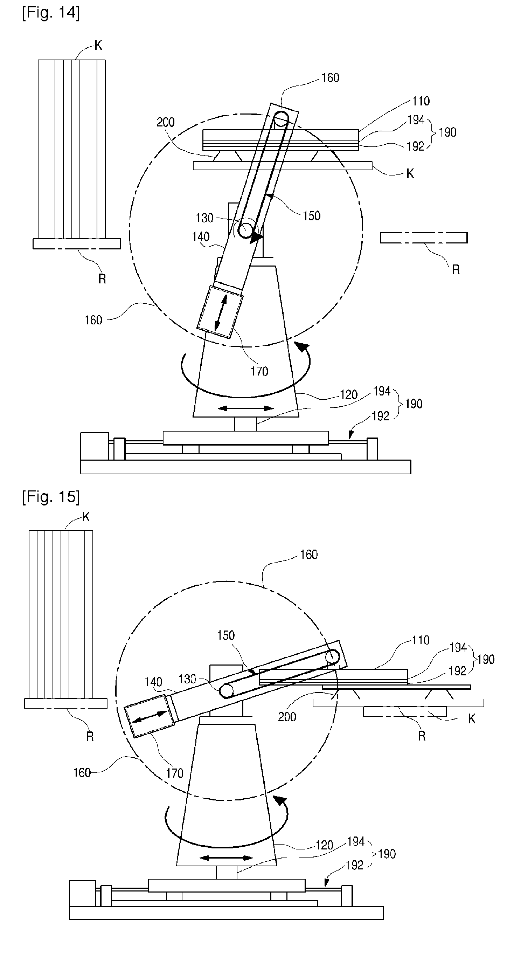

In such a state, the phase shifting means 134 and the force transmitting part 150 are simultaneously operated to move as shown in Fig. 14.

That is, the transferring target K of Fig. 14 is positioned at the right side as compared to the position shown in Fig. 13 and rotates in a counterclockwise direction to be parallel to the ground surface.

More specifically, as the reference shaft 130 is rotated by the rotational force applied from the phase shifting means 134 to rotate the force transmitting part 150, when the phase preservation part 110 rotates to change its phase, the transferring target K is parallel to the ground surface.

At this time, the supporting parts 140 are rotated about the reference shaft 130 by the action of the force generating part 180 to move the transferring target K to the right side.

As mentioned above, the transferring target K can simultaneously move in a revolving motion around the reference shaft 130 and the rotary motion about the driven shaft 160 by simultaneously acting the phase shifting means 134 and the force generating part 180, and the transferring target K can move at various positions as shown in Fig. 15.

The scope of the present invention is not limited to the aforementioned embodiment, and it is to be appreciated that those skilled in the art can change or modify the embodiments without departing from the scope of the present invention.

For example, in the embodiment of the present invention, it has been described that a pair of supporting parts is provided to load and transfer the heavy transferring target, but the supporting part may have a cantilever shape by simplifying components depending on a load and size of the transferring target to be loaded and transferred.

### [Industrial Applicability]

As described above, in the apparatus having a phase preservation means, a single force generating part and a single force transmitting member or a plurality of force transmitting members are provided, and the phase preservation part that preserves mechanically the same phase even though the phase preservation part revolves when the force generating part generates the rotational force is provided.

Accordingly, there are advantages in that it is possible to stably move the transferring target at any position of a circumference through unitarily driving, it is convenient to control, and it is possible to save energy.

Further, since the number of components is small, it is possible to reduce manufacturing cost and it is easy to assemble and install. Furthermore, since foreign substances are minimized, it is possible to apply the apparatus to a clean room facility.

Moreover, in the present invention, the additional device is further provided so as to perform any one operation of an adsorbing operation, gripping operation, and transferring operation of the transferring target.

Accordingly, it is easy to load and move the transferring target, and since the motion part and the additional device are interlocked with each other to load and transfer the transferring target at loaded locations having different heights and different positions, it is possible to apply the apparatus to various areas.

In addition, in the present invention, the phase shifting means for selectively shifting the phase of the phase preservation part is further provided.

Accordingly, it is possible to easily transfer various transferring targets positioned even at any position.

## Claims

1. An apparatus having a phase preservation means, the apparatus comprising:
a phase preservation means that has a reference shaft fixed to one sides of frames supporting a plurality of components, a driven shaft revolving around the reference shaft with a predetermined distance spaced apart therebetween, a force transmitting part connected to the driven shaft and the reference shaft to restrict rotation of the driven shaft, and supporting parts that guide revolving of the driven shaft around the reference shaft when the supporting parts are rotated by a rotational force applied by the force generating part and allows a phase of the driven shaft to be preserved; and
a phase preservation part that is connected and fixed to one side of the driven shaft.

2. The apparatus having a phase preservation means according to claim 1, the apparatus further comprising:
a motion part that forcibly moves the phase preservation part in a rotary motion and a straight-line reciprocating motion.

3. The apparatus having a phase preservation means according to claim 2, wherein an additional device that performs at least any one operation of an adsorbing operation, a gripping operation, a transferring operation, and a rotating operating of a transferring target is further provided at one side of the phase preservation part.

4. The apparatus having a phase preservation means according to any one of claims 1 to 3,
wherein the force transmitting part includes:
a first force transmitting member that is pivotally connected to the reference shaft;
a second force transmitting member that is pivotally connected to the driven shaft; and
a third force transmitting member that is connected to the first force transmitting member and the second force transmitting member to restrict slipping and restricts rotation of the second force transmitting member when the supporting parts rotate.

5. The apparatus having a phase preservation means according to claim 4, wherein a connecting part that transmits the rotational force of the force generating part is provided at one of the supporting parts.

6. The apparatus having a phase preservation means according to claim 5, wherein the connecting part is spaced apart from the reference shaft, and a rotation center of the connecting part is positioned in the same straight line as the reference shaft.

7. The apparatus having a phase preservation means according to claim 6, wherein a first rotation guiding member that guides the rotation of the supporting part about the reference shaft is provided at one side of the reference shaft.

8. The apparatus having a phase preservation means according to claim 7, wherein a second rotation guiding member that allows the supporting parts and the driven shaft to freely rotate when the driven shaft revolves around the reference shaft by the rotation of the supporting parts is provided at one side of the driven shaft.

9. The apparatus having a phase preservation means according to claim 8, wherein a weight balance that offsets weights of the supporting parts, the driven shaft and the transferring target to reduce a load of a driving part is provided at one of the supporting parts.

10. The apparatus having a phase preservation means according to claim 9, wherein a position of the weight balance is able to be changed.

11. The apparatus having a phase preservation means according to claim 4, wherein a phase shifting means for varying a phase of the phase preservation part by applying the rotational force to the reference shaft to rotate the force transmitting part is provided at one of the frames.
